# EUROPÄISCHE PATENTSCHRIFT

(11) **EP 4 351 098 B1**
(45) Veröffentlichungstag und Bekanntmachung des Hinweises auf die Patenterteilung: **09.09.2026**
(21) Anmeldenummer: 23201495.1
(22) Anmeldetag: 03.10.2023
(51) Int. Cl.: H04L 41/147, H04L 41/16, H04L 43/16, G07C 5/00

(54) **VERFAHREN ZUM ERKENNEN UND AUSWERTEN EINES UNFALLS EINES FAHRZEUGS**
METHOD FOR DETECTING AND EVALUATING AN ACCIDENT OF A VEHICLE
PROCÉDÉ DE DÉTECTION ET D'ÉVALUATION D'UN ACCIDENT D'UN VÉHICULE

(30) Priorität: 04.10.2022 US 202263413047 P
(43) Veröffentlichungstag der Anmeldung: 10.04.2024
(73) Patentinhaber: Sfara Inc., Hoboken, NJ 07030 (US)
(72) Erfinder: GHOMASHCHI, Ali, Brooklyn, 11213 (US)
(74) Vertreter: RavensPAT Patentanwälte Partnerschaft mbB

(56) Entgegenhaltungen:
- WO-A1-2019/224712
- US-A1- 2021 027 555

## Beschreibung

### Gegenstand der Erfindung

Die vorliegende Erfindung betrifft das technische Gebiet der Verfahren zur Erkennung und Bewertung eines Unfalls eines Fahrzeugs.

### Stand der Technik

Im Stand der Technik sind Verfahren bekannt, bei welchen durch die Auswertung von Sensordaten eines z.B. eines Smartphones, in Zusammenwirkung mit z.B. Sensoren eines Kraftfahrzeugs oder anderen verfügbaren Sensordaten, eine Unfallerkennung durchgeführt wird. Dabei werden in der Regel Grenzwerte an Sensordaten definiert, welche bei Überschreitung die Wahrscheinlichkeit eines Unfalls erkennen lassen. Beispielsweise können hier Beschleunigungskräfte erfasst werden, welche nicht der normalen Fortbewegung oder Handhabung eines Smartphones entsprechen. Die Verfahren nach dem Stand der Technik sind jedoch teilweise ungenau und sollen bei komplexeren Situationen oder minderschweren Unfällen an Zuverlässigkeit verbessert werden.

Dokument WO 2019224712 offenbart ein System, welches Fahrzeugunfälle mithilfe von Bewegungsdaten (z. B. Beschleunigung oder Position) erkennt und sowie Merkmale des Aufprallereignisses aggregiert. Dazu gehören Kontextmerkmale (z. B. Straßentyp, Geschwindigkeitsbegrenzung, relevante Orte in der Nähe des Aufprallorts) und Ereignismerkmale (z. B. Aufprallkraft, zurückgelegte Strecke und Geschwindigkeit vor dem Aufprall). Die Sensordaten werden einem neuronalen Netzwerk zugeführt, um Merkmalsvektoren zu generieren, die die Aufpralldaten beschreiben.

### Detaillierte Beschreibung

Technische Aufgabe der vorliegenden Erfindung ist es somit den Stand der Technik und die Sicherheit im Straßenverkehr zu verbessern.

Die technische Aufgabe wird durch ein Verfahren mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem Aspekt wird die technische Aufgabe der Erfindung durch ein Verfahren zur Erkennung und Bewertung eines Unfalls eines Fahrzeugs gelöst, wobei die Verfahrensschritte zumindest teilweise auf einem Mobilgerät ausgeführt werden, wobei das Mobilgerät wenigstens einen Sensor aufweist, wobei das Mobilgerät mit dem Fahrzeug mitgeführt wird, wobei auf dem Mobilgerät ein Unfallüberwachungssystem derart betrieben wird, dass
a) Sensordaten des Sensors mittels des Mobilgeräts ständig erfasst werden und nach der Art eines Loop-Aufnahme-Speichers, eines Schleifen-Speichers, eines Überlaufspeichers oder eines FiFo-Puffer-Speichers in einem Speicher vorrübergehend gespeichert werden;
b) sobald von den Sensordaten ein für den Sensor festgelegter erster Schwellenwert passiert wird, in dem Speicher ein erster Zeitstempel gesetzt wird;
c) sobald danach von den Sensordaten ein für den Sensor festgelegter zweiter Schwellenwert passiert wird, in dem Speicher ein zweiter Zeitstempel gesetzt wird;
d) sobald danach von den Sensordaten der zweite Schwellenwert erneut passiert wird, ein dritter Zeitstempel gesetzt wird;
e) sobald danach von den Sensordaten der erste Schwellenwert erneut passiert wird, ein vierter Zeitstempel gesetzt wird,
   - wobei der zweite Schwellenwert oberhalb oder unterhalb des ersten Schwellenwertes liegt;
f) falls wenigstens der erster Zeitstempel und der zweiter Zeitstempel und der vierter Zeitstempel vorliegen, ein erstes Charakteristikum der Sensordaten anhand einer Zeitspanne definiert wird, wobei die Zeitspanne zumindest einen Teil eines Zeitfensters umfasst, das sich zwischen dem ersten Zeitstempel und dem vierten Zeitstempel erstreckt;
g) das Charakteristikum zu dessen Bewertung einem maschinellen Lern- und Auswerteprozess zugeführt wird;
h) eine Unfallwahrscheinlichkeit auf der Grundlage des Charakteristikums, sowie weiterer bereits definierter Charakteristika erkannt und/oder prognostiziert wird;
i) ein Ergebnis des Verfahrens wenigstens von dem Mobilgerät ausgegeben wird.

Im Sinne der Erfindung ist unter einem Loop-Aufnahme-Speicher, oder einem Schleifen-Speicher, oder einem Überlaufspeicher oder einem FiFo-Puffer-Speicher jede Art von Speicher zu verstehen, bei der Sensoren fortwährend Sensordaten liefern, die in einem Speicher mit definierter und begrenzter Größe aufgezeichnet werden und sobald dieser Speicher voll ist, die bis zu diesem Zeitpunkt aufgezeichneten Inhalte nach dem First-In-First-Out-Prinzip (FiFo-Prinzip) mit neuen Daten überschrieben werden.

Unter dem Passieren eines Schwellenwertes kann im Sinne der Erfindung sowohl das Über-, als auch das Unterschreiten eines Schwellenwerts verstanden werden, je nachdem, ob die sich in ihrer zeitlichen Abfolge auf den Schwellenwert zubewegenden Sensordaten, sich von unterhalb oder von oberhalb des Schwellenwertes auf diesen zubewegen.

Im Sinne der Erfindung kann unter einem Mobilgerät ein Mobiltelefon, ein Smartphone, ein Tablet-PC, ein Navigationsgerät oder Ähnliches verstanden werden.

Unter einem Charakteristikum ist ein Bereich einer Abfolge von Sensordatenwerten zu verstehen, was beispielsweise einem Peak der Sensordaten entsprechen kann und beispielsweise binnen einer bestimmten Zeitspanne liegt. Ein Charakteristikum kann auch durch einen Abschnitt einer Kurve von Sensordaten über die Zeit definiert sein, wobei der Abschnitt einem wiederkehrenden Ereignis in der Bewegung oder im Verhalten zugeordnet werden kann.

Vorteilhaft kann das Verfahren mittels eines von beispielsweise einem Passagier oder einem Fahrer mitgeführten Mobilgeräts zur Anwendung gebracht werden. Eine technische Ausstattung oder eine zusätzliche oder nachträgliche Aufrüstung des Fahrzeuges kann so vermieden werden. Zudem kann das Verfahren unabhängig von dem von dem Fahrer genutzten Fahrzeug eingesetzt werden. Auch kann es für unterschiedliche Fahrzeuge eines Fahrers als Benutzer des Mobilgeräts genutzt werden. Insbesondere bei Car-Sharing Lösungen kann so das Verfahren auch bei einem Fahrzeugwechsel fortwährend angewandt werden. Das Mobilgerät ist in der Regel mit diversen Sensoren ausgestattet sein, wie es beispielsweise bei Smartphones der Fall ist, wodurch diese Sensoren für das Verfahren vorteilhaft genutzt werden können.

Die während des Mitführens oder des Benutzens des Mobilgeräts, von seinen Sensoren generierten Sensordaten können mittels des Verfahrens vorteilhaft auf ein Charakteristikum eingeschränkt werden, das zur Einschätzung, zur Bewertung, zur Analyse oder zur Feststellung eines Unfalls genutzt werden kann.

Dadurch dass die Sensordaten in einem Speicher nach der Art eines FiFo-Speichers gespeichert werden, können die mitunter begrenzen Speichermöglichkeiten bzw. Speicherkapazitäten eines Mobilgeräts vorteilhaft genutzt werden. Sämtliche weiteren und für einen Unfall nicht relevanten Sensordaten der Sensoren können so verworfen und Speicherplatz eingespart werden, was ein möglichst schnelles Durchführen des Verfahrens ermöglichen kann. Vorteilhaft kann weiterhin der maschineller Lern- und Auswerteprozess mit dem so vorliegenden Charakteristikum, oder beispielsweise mit weiteren Charakteristika aus vorherigen Messungen, und so das Verfahren verbessert werden. Zusätzlich stehen gespeicherte Daten zur lokalen Verarbeitung durch die Rechenkapazität des mobilen Geräts zur Verfügung. Dies kann zu geringeren Latenzzeiten führen als bei Cloud Computing und kann für Echtzeitanalysen hilfreich sein.

Indem die Ergebnisse des Verfahrens auf dem Mobilgerät angezeigt bzw. ausgegeben werden, können vorteilhaft am Ort des Mobilgeräts Maßnahmen zur Reaktion auf den möglichen Unfall, oder Maßnahmen zur zukünftigen Reaktion auf mögliche Unfälle oder zur Vermeidung von Unfällen getroffen werden. So können die Ergebnisse beispielsweise an ein entferntes System, wie ein Callcenter, gesendet werden, um eine Reaktion auf den potenziellen Unfall einzuleiten. Darüber hinaus können die Ergebnisse in dem entfernten System gespeichert werden, zum Beispiel zur Verwendung in zukünftigen maschinellen Lern- und Auswertungsprozessen. Alternativ oder zusätzlich können die Ergebnisse auf dem Mobilgerät (z. **B.** auf einem Display der Benutzeroberfläche) und/oder einem oder mehreren anderen Geräten, **z. B.** einem Mobilgerät eines potenziellen Unfallgegners, angezeigt werden.

In einer technisch vorteilhaften Ausführungsform des Verfahrens ist vorgesehen, dass das Charakteristikum die Sensordaten mindestens zwischen dem ersten und dem vierten Zeitstempel umfasst.

Hierdurch kann das Verfahren auf einen besonders relevanten Teil der Daten konzentriert angewandt werden, was das Ergebnis verbessern kann und ein Ergebnis schneller erreicht werden kann.

Nach dieser vorteilhaften Ausführungsform ist es auch möglich, dass das Charakteristikum zumindest ein Segment einer Kurve von Sensordaten über die Zeit zumindest zwischen dem ersten und dem vierten, vorzugsweise zwischen dem ersten und dem dritten Zeitstempel umfasst.

Dadurch kann das Verfahren auch über zusätzliche Sensordaten oder mehrere Charakteristika innerhalb des relevanten Zeitfensters zu Berechnungs-, Analyse- und Prüfzwecken verfügen.

In einer weiteren technisch vorteilhaften Ausführungsform des Verfahrens ist vorgesehen, dass das Charakteristikum mit einer Gewichtung beaufschlagt wird und dem Lern- und Auswerteprozess zugeführt wird, wobei die Gewichtung auf Grundlage der Zeitstempel und/oder dem Verhältnis der Zeitstempel zueinander und/oder der Zeitdifferenzen zwischen der Zeitstempel und/oder des Verlaufs der Sensordaten binnen des Charakteristikums, basiert.

Die Gewichtung ermöglicht außerdem die Unterscheidung zwischen falsch-positiven Ereignissen und echten Unfällen, die erkannt werden sollen, und liefert einen weiteren Parameter für die gewünschte Methode.

In einer weiteren technisch vorteilhaften Ausführungsform des Verfahrens ist vorgesehen, dass der Lern- und Auswerteprozess lokal auf dem Mobilgerät und/oder dezentral auf einer Cloudcomputing-Plattform ausgeführt wird.

Vorteilhaft können so Charakteristika und/oder Bewertungen, die beispielsweise von anderen Benutzern anderer Mobilgeräte im selben oder in anderen Fahrzeugen, beispielsweise an einem anderen Ort, beispielsweise zu einer anderen Zeit detektiert wurden, zur Verbesserung des Verfahrens genutzt werden. Außerdem können vorteilhaft Rechen- und Speicherkapazitäten fernab des Mobilgeräts genutzt werden, die dem Verfahren sonst nicht zur Verfügung stünden.

In einer weiteren technisch vorteilhaften Ausführungsform des Verfahrens ist vorgesehen, dass das Charakteristikum nur dann dem maschinellen Lern- und Auswerteprozess zugeführt wird, falls die Zeitspanne des Charakteristikums unter 5 Sekunden, insbesondere unter 1 Sekunde liegt.

Hierdurch kann zusätzlich eine mögliche Relevanz des Charakteristikums besser bestimmt und die Aussagekraft des Verfahrens weiter verbessert werden.

In einer weiteren technisch vorteilhaften Ausführungsform des Verfahrens ist vorgesehen, dass im Anschluss an eine Zeitspanne des Charakteristikums, insbesondere an den vierten Zeitstempel anschließend, eine Wartezeit abgewartet wird, wobei die Wartezeit bis zu zwei Sekunden, insbesondere bis zu einer Sekunde beträgt.

Als Zeitspanne des Charakteristikums kann beispielsweise die Zeit zwischen erstem Zeitstempel und vierten Zeitstempel verstanden werden. Mittels der Wartezeit kann in Erfahrung gebracht werden, ob ein Auslaufen des Signals, ein sogenanntes Calm Ending, festgestellt wird oder weitere Signalausschläge detektiert werden. Dies kann zusätzliche Informationen liefern, die das Verfahren weiter verbessern können.

In einer weiteren technisch vorteilhaften Ausführungsform des Verfahrens ist vorgesehen, dass der erste Schwellenwert und/oder der zweite Schwellenwert situationsabhängig, insbesondere variabel, festgelegt wird/werden.

Beispielsweise liefern Bodenwellen bei höheren Geschwindigkeiten stärkere Erschütterungen und dadurch größere Ausschläge der Daten, wenngleich dies unter Umständen nicht berücksichtigt werden soll. In vorteilhafter Weise kann somit ermöglicht werden, dass beispielsweise in Abhängigkeit von äußeren Umständen, wie beispielsweise der durch die Geschwindigkeit des Mobilgeräts erfassten Geschwindigkeit des Fahrzeugs gegenüber der Umgebung, die Schwellenwerte geändert werden können und beispielsweise ein höherer oder ein geringerer Schwellenwert vorliegt.

In einer weiteren technisch vorteilhaften Ausführungsform des Verfahrens ist vorgesehen, dass in einem initialen Zustand die Funktionsfähigkeit der Sensoren anhand der Sensordaten überprüft wird.

Hierdurch kann die Zuverlässigkeit des Verfahrens verbessert werden, da so der Einsatz von fehlerhaften Sensoren verhindert werden kann. FiFo Daten, die sich auf ein mobiles Gerät und Sensoren im Ruhezustand beziehen, können analysiert und zu Kontroll- und Initialisierungszwecken verwendet werden.

In einer weiteren technisch vorteilhaften Ausführungsform des Verfahrens ist vorgesehen, dass mittels des Speichers Sensordaten für die Dauer von 30 Sekunden, insbesondere für 25 Sekunden, bevorzugt für 20 Sekunden, im Speziellen für 15 Sekunden oder 10 Sekunden gespeichert werden.

In vorteilhafter Weise kann eine, für eine für die Dauer eines möglichen Unfalls, adäquate Zeitspanne gewählt werden in welcher die dabei anfallenden Daten dem Verfahren zugeführt werden können. Dies kann zu einer Verbesserung des Verfahrens insbesondere im Hinblick auf eine beschleunigte Durchführung beitragen. Vorzugsweise kann die Dauer auch dynamisch in Abhängigkeit von einer bestimmten Situation, in der sich das mobile Gerät befindet, **z.B.** mit höherer Geschwindigkeit oder in einem bestimmten Fahrzeugtyp, eingestellt werden.

In einer weiteren technisch vorteilhaften Ausführungsform des Verfahrens ist vorgesehen, dass Sensordaten eines Audio-Sensors und/oder eines Beschleunigungssensors und/oder eines Foto-Sensors und/oder eines Gyro-Sensors und/oder eines GPS-Sensors und/oder eines barometrischen Sensors und/oder eines Näherungssensors erfasst und/oder ausgewertet werden.

Vorteilhaft können so die in der Regel in modernen Mobiltelefonen vorhandene Vielzahl von Sensoren für das Verfahren eingesetzt werden. Beispielsweise akustische Auswirkungen und/oder Änderungen in der Beschleunigung des Mobilgeräts, die von einem möglichen Unfall rühren, können so vorteilhaft detektiert und verarbeitet werden.

In einer weiteren technisch vorteilhaften Ausführungsform des Verfahrens ist vorgesehen, dass weitere Charakteristika, die beispielsweise mittels weiterer Mobilgeräte definiert wurden, dem Lern- und Auswerteprozess zugeführt werden.

Dies kann sich zusätzlich positiv auf eine Verbesserung des maschinellen Lern- und Auswerteprozesses und somit des Verfahrens und der Zuverlässigkeit auswirken, insbesondere um falsch positive Erkennungen zu vermeiden. Zusätzlich können Charakteristika verglichen werden und Parameter, **z.B.** zur Gewichtung oder zum Vergleich, durch den Lernprozess aufgedeckt werden.

In einer weiteren technisch vorteilhaften Ausführungsform des Verfahrens ist vorgesehen, dass die Sensordaten einer Datenkorrektur unterzogen werden, insbesondere in Abhängigkeit von der Situation, in der sich das mobile Gerät befindet. Dabei können zusätzliche Informationen, **z.B.** über die Art der Fortbewegung oder eine bestimmte persönliche Information der Person, die das mobile Gerät benutzt, berücksichtigt werden.

Beispielweise können somit Hintergrundsensordaten wie beispielsweise Rauschen abgezogen werden, was mittels einer solchen Datenkorrektur berücksichtigt werden kann und sich zusätzlich vorteilhaft auf das Verfahren auswirken kann. Beispielsweise können Sensordaten eines sich auf Grund eines Unfalls im freien Fall befindlichen Mobilgeräts abgezogen werden, oder das Geräusch eines im Hintergrund eingeschalteten Radios im Fahrzeug abgezogen werden, um das Verfahren zusätzlich zu verbessern.

In einer weiteren technisch vorteilhaften Ausführungsform des Verfahrens ist vorgesehen, dass die Sensordaten auf die Dynamik des Schwerpunktes des Mobilgerätes, den Einfluss des Schwerkraftvektors auf den/die Sensor(en) und/oder gegenüber einem Inertialsystem des Mobilgeräts korrigiert werden.

Im Sinne der Erfindung ist unter einem Inertialsystem ein Bezugssystem zu verstehen in dem jeder kräftefreie Körper relativ zu diesem Bezugssystem in Ruhe verharrt oder sich gleichförmig, geradlinig und nicht beschleunigt, bewegt. Ein Vektor beschreibt im Allgemeinen eine Größe, die sowohl eine Richtung als auch einen Betrag hat, insbesondere zur Bestimmung der Position eines Punktes im Raum relativ zu einem anderen Punkt.

Insbesondere kann sich dies zusätzlich vorteilhaft auf das Verfahren auswirken, wenn sich in Folge eines Aufpralls oder Unfalls das Mobilgerät im freien Fall befindet, oder durch das Fahrzeug geschleudert wird. Hierdurch kann die Aussagekraft der Daten zusätzlich verbessert werden.

In einer weiteren technisch vorteilhaften Ausführungsform des Verfahrens ist vorgesehen, dass die Sensordaten auf die Dynamik des Inertialsystems des Fahrzeugs gegenüber dem Inertialsystem des Mobilgeräts korrigiert werden.

Vorstellbar ist, dass sich das Mobiltelefon bei einem Unfall, auf Grund seiner Trägheit, innerhalb des Fahrzeuges relativ zu dem Fahrzeug bewegt, was die Qualität der aufgenommenen Daten beeinflussen oder verschlechtern könnte. Vorteilhaft kann mittels einer entsprechenden Korrektur der Sensordaten eine Verbesserung des Verfahrens ermöglicht und die Sensordaten entsprechend angepasst werden.

In einer weiteren technisch vorteilhaften Ausführungsform des Verfahrens ist vorgesehen, dass das Charakteristikum mit den weiteren Charakteristika, insbesondere gespeicherten Charakteristika aus der Vergangenheit, verglichen wird.

Hierdurch können vorteilhaft Erfahrungswerte genutzt werden und dadurch das Verfahren zusätzlich verbessert werden.

In einer weiteren technisch vorteilhaften Ausführungsform des Verfahrens ist vorgesehen, dass anhand der Sensordaten zwischen dem zweiten Zeitstempel und dem dritten Zeitstempel, insbesondere zwischen dem ersten Zeitstempel und dem vierten Zeitstempel, eine Bewertung des Charakteristikums getroffen wird, insbesondere dahingehend wie gravierend ein das Charakteristikum auslösende Ereignis, insbesondere ein Unfall, ist.

Vorteilhaft kann so der spezifische Verlauf der Sensordaten innerhalb des Charakteristikums berücksichtigt werden, was individuelle Möglichkeiten zur Bewertung liefert, was das Verfahren zusätzlich und für zukünftige Einsätze verbessern und optimieren kann.

Generell ist davon auszugehen, dass der maschinelle Lern- und Auswertungsprozess mehrere Charakteristika berücksichtigen kann, die sich aus Datenströmen verschiedener Sensoren ergeben. Je mehr Charakteristika gegeneinander ausgewertet und für zusätzliche Analysen wie Verifizierung, Gewichtung, Korrektur oder Plausibilitätsprüfung verwendet werden können, desto besser ist die Verbesserung der Erkennungsqualität des erfindungsgemäßen Verfahrens, insbesondere die Vermeidung von falsch positiven Ergebnissen.

### Beschreibung der Figuren

Ausführungsbeispiele der Erfindung sind in den Figuren dargestellt und werden im Folgenden näher beschrieben.

Es zeigt:
- Fig. 1: eine schematische Darstellung von erfassten Sensordaten;
- Fig. 2: eine schematische Darstellung des Verfahrens;
- Fig. 3: ein Blockdiagramm, das ein Beispiel für eine Remote-Server-Architektur zeigt;
- Fig. 4: ein vereinfachtes Blockdiagramm eines Beispiels für ein Client-Gerät;
- Fig. 5: zeigt ein Beispiel für ein tragbares oder mobiles Gerät;
- Fig. 6: zeigt ein Beispiel für ein Computersystem.

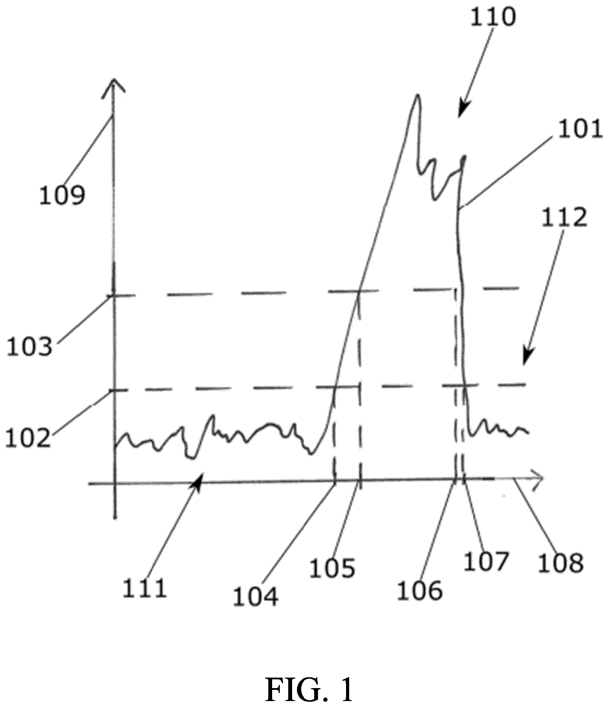

Die Figur 1 zeigt eine schematische Darstellung von erfassten, vom Sensor generierten Sensordaten 101. Über eine Zeitachse 108 sind die von einem Sensor generierten Sensordaten 101 auf einer Einheitenachse 109 abgetragen. Beispielsweise könnte hier als Sensordaten 101 die Lautstärke der Umgebung eines Mobiltelefons aufgetragen sein, wobei das Mobiltelefon mittels eines Mikrofons als Sensor die Geräusche innerhalb eines Fahrzeugs detektiert.

Die Sensordaten 101 werden kontinuierlich erfasst und nach der Art eines Loop-Aufnahme-Speichers, eines Schleifen-Speichers, eines Überlaufspeichers oder eines FiFo-Puffer-Speichers in einem Speicher vorrübergehend gespeichert. Vorteilhaft kann so Speicherplatz eingespart werden und das Verfahren beschleunigt durchgeführt werden, da eine Reduktion der zu verarbeitenden Datenmenge stattfindet. Die zeitliche Länge der dargestellten Sensordaten 101 beträgt bis zu 30 Sekunden, insbesondere 25 Sekunden, bevorzugt 20 Sekunden, im Speziellen 15 Sekunden oder 10 Sekunden, was zusätzlich die Durchführung des Verfahrens beschleunigen kann.

Sobald von den Sensordaten 101 ein für den Sensor festgelegter erster Schwellenwert 102 passiert wird, wird in dem Speicher ein erster Zeitstempel 104 gesetzt. Sobald danach von den Sensordaten 101 ein für den Sensor festgelegter zweiter Schwellenwert 103 passiert wird, wird in dem Speicher ein zweiter Zeitstempel 105 gesetzt. Wird darauffolgend dieser zweite Schwellenwert 103 in umgekehrter Richtung ein weiteres Mal passiert, wird ein dritter Zeitstempel 106 im Speicher gesetzt. Sobald danach von den Sensordaten 101 erneut der erste Schwellenwert passiert wird, wird ein vierter Zeitstempel 107 gesetzt. Hiermit kann ein von den Sensoren detektiertes Ereignis, wie beispielsweise ein Unfall, als Charakteristikum 110 oder Peak 110 in den Sensordaten 101 zeitlich eingegrenzt werden. Dieses Charakteristikum 110 kann so für eine Bewertung oder Analyse genutzt werden.

Falls also wenigstens drei Zeitstempel 104, 105, 106 vorliegen, kann ein Charakteristikum 110 der Sensordaten 101 anhand einer Zeitspanne definiert werden, die wenigstens zwischen dem ersten Zeitstempel 104 und dem vierten Zeitstempel 106 liegt. Dieses Charakteristikum 110 wird sodann zu dessen Bewertung einem maschinellen Lern- und Auswerteprozess zugeführt und eine Unfallwahrscheinlichkeit auf der Grundlage des Charakteristikums 110 prognostiziert.

Der maschinelle Lern- und Auswertungsprozess kann mehrere Charakteristika 110 berücksichtigen, die sich aus Datenströmen verschiedener Sensoren ergeben. Je mehr Charakteristika gegeneinander ausgewertet und für zusätzliche Analysen wie Verifizierung, Gewichtung, Korrektur oder Plausibilitätsprüfung verwendet werden können, desto besser ist die Verbesserung der Erkennungsqualität des erfindungsgemäßen Verfahrens, insbesondere die Vermeidung von falsch positiven Ergebnissen.

Beispielsweise kann so die Schwere eines Unfalls bewertet und wenigstens auf dem Mobilgerät dargestellt werden. Beispielsweise können so Aussagen darüber getroffen werden, wie gravierend ein Unfall war oder welche Maßnahmen in entsprechenden Fällen zu ergreifen sind.

Das Charakteristikum 110 kann weiterhin mit einer Gewichtung beaufschlagt werden, die auf Grundlage der Zeitstempel 104, 105, 106, 107 und/oder der Zeitdifferenzen zwischen der Zeitstempel 104, 105, 106, 107 und/oder deren Verhältnis der Zeitstempel 104, 105, 106, 107 zueinander und/oder des Verlaufs der Sensordaten 101 binnen des Charakteristikums 110 basiert. Beispielsweise kann ein Gradient der Sensordaten 101 zwischen dem ersten Zeitstempel 104 und dem zweiten Zeitstempel 105 eine Aussage darüber liefern, mit welcher Intensität ein Aufprall stattgefunden hat. Auch kann vorgesehen sein, dass das Charakteristikum 110 nur dann dem maschinellen Lern- und Auswerteprozess zugeführt wird, falls die Zeitspanne des Charakteristikums 110 unter 5 Sekunden, insbesondere unter 1 Sekunde liegt

Wie in Figur 1 dargestellt, umfasst das Charakteristikum 110 Sensordaten 101 mindestens zwischen dem ersten Zeitstempel und dem vierten Zeitstempel 107, und somit von einer Zeitspanne zwischen erstem Zeitstempel 104 und viertem Zeitstempel 107.

In Figur 1 ist der zweite Schwellenwert 103 oberhalb des ersten Schwellenwerts 102 dargestellt. Vorgesehen ist aber auch, dass ein beispielsweise umgekehrter und in Figur 1 nicht dargestellte Fall ausgeführt ist, in welcher der zweite Schwellenwert 103 unterhalb des ersten Schwellenwerts 102 liegt, was beispielsweise bei Sensordaten 101 eines Beschleunigungssensors vorteilhaft wäre. Darüber hinaus können die Schwellenwerte 102, 103 variabel und situationsabhängig festgelegt werden. Dies kann vorteilhaft beispielsweise die Situation berücksichtigen, wenn über eine unebene Landstraße gefahren wird, plötzlich Stöße, Vibrationen und/oder laute Geräusche auftreten, die jedoch keinen Unfall bedeuten.

Weiterhin ist in Figur 1 ein initialer Zustand 111 dargestellt in welchem die Funktionsfähigkeit der Sensoren anhand der Sensordaten 101 überprüft werden kann. Auch kann beispielsweise ein in diesem Bereich auftretendes Rauschen zur Korrektur der Sensordaten herangezogen werden, was das Verfahren zusätzlich verbessern kann. Vorteilhaft kann auch vorgesehen sein, dass im Anschluss an die Zeitspanne des Charakteristikums, beispielsweise zwischen dem ersten Zeitstempel 104 und dem vierten Zeitstempel 107, eine Wartezeit 112 abgewartet wird. Die Wartezeit 112 kann bis zu zwei Sekunden, insbesondere eine Sekunde betragen. Hier kann vorteilhaft überprüft werden, ob die Sensordaten weitere Informationen liefern, die zur Bewertung herangezogen werden können. Beispielsweise kann ein ebenmäßiges Rauschen in der Wartezeit 110, das dem Rauschen des initialen Zustands entspricht auf einen weniger gravierenden Unfall schließen lassen, als wenn die Sensordaten 101 ein Auslaufen oder eine Nulllinie zeigen würden.

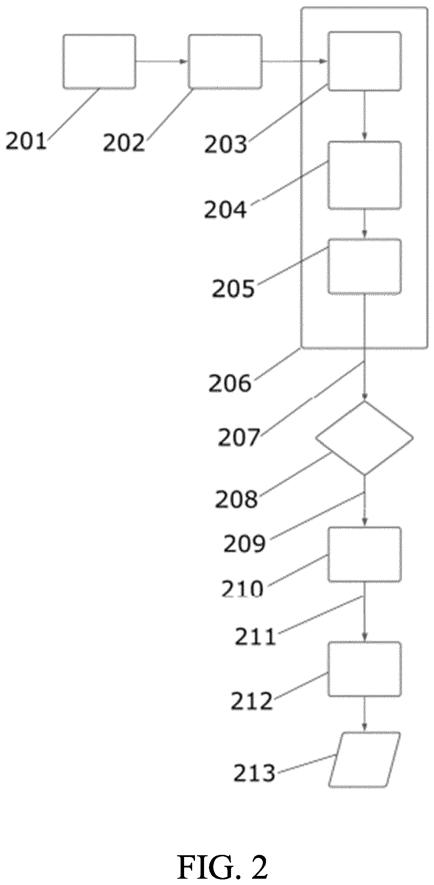

Die Figur 2 zeigt in Zusammenschau mit Figur **1****,** dass zunächst eine Filterung 201 der an den Sensoren ankommenden Messgrößen stattfindet. Beispielsweise wird etwaiges Rauschen, Gravitation oder Fehler von den Sensordaten, die mittels der Sensoren generiert werden abgezogen. Vorteilhaft kann so die Qualität der von dem Sensor ausgegebener Daten deutlich gesteigert und das Verfahren dadurch verbessert werden.

Die gefilterten Daten werden sodann in einem Speicher, einem Datenpuffer 202, gespeichert. Dieser arbeitet beispielsweise nach der Art eines FiFo-Puffers mit 15 Sekunden Aufnahmedauer. So können unter Einsparung des Speicherbedarfs Sensordaten vorgehalten und der weiteren Verarbeitung zugeführt werden. Beispielsweise sind die Sensordaten, die als erstes gespeichert werden, diejenigen, die nach Ablauf der beispielsweise 15 Sekunden, als erstes verworfen und gelöscht werden.

Innerhalb einer Signalverarbeitung 206 wird sodann in einem Initialzustand 203 überprüft ob beispielsweise die Sensordaten initialen Bedingungen entsprechen. Beispielsweise wird hier geprüft, ob die verwendeten Sensoren voll funktionsfähig sind und ob beispielsweise vor Fahrtantritt ein Beschleunigungssensor erwartungsgemäß keine oder nur geringe Werte ausgibt. Vorteilhaft kann dadurch vermieden werden, dass das Verfahren mit fehlerhafte Sensordaten durchgeführt wird.

Ein zweiter Schwellenwert 204 gibt sodann die Bedingung vor, dass die Sensordaten Bedingungen eines Schwellenwertes entsprechen. Beispielsweise kann hier ein definierter Lautstärkewert oder ein definierter Beschleunigungswert vorgegeben sein, der überschritten werden muss, um im Verfahren weiter fortschreiten zu können. Ein solcher Schwellenwert kann variabel sein und von weiteren Parametern oder äußeren Umständen abhängen. Beispielsweise kann er in Abhängigkeit der Reisegeschwindigkeit in einem Fahrzeug geändert werden.

In einem Endzustand 205 wird überprüft, ob die Daten den Bedingungen eines Endzustandes entsprechen. Beispielsweise wäre im Anschluss an eine starke Beschleunigung auf Grund eines Unfalls eine nur sehr geringe Beschleunigung oder ein Ausbleiben der Sensordaten zu erwarten.

Ist mittels der Signalverarbeitung 206 der zeitliche Rahmen für Start- und Endzeitpunkt und somit der Zeitspanne eines in Figur 1 dargestellten Charakteristikums 110 eines möglichen Unfalls bestimmt, findet eine Übergabe 207 der zwischen Start- und Endzeitpunkt gesammelter Daten als Charakteristikum 110 an einen nächsten Schritt statt. Bei einer nun stattfindenden Prüfung des Charakteristikums 208 werden beispielsweise dessen Dauer, Geschwindigkeit, Gradient oder Intensität mit zuvor festgelegten Bedingungen verglichen. Vorteilhaft kann hier ein unter Umständen falsch definiertes Charakteristikum 110 einer weiteren Verarbeitung vorenthalten werden, was die Qualität des Verfahrens zusätzlich verbessern kann.

Entspricht das Charakteristikum 110 jedoch den zuvor festgelegten Bedingungen und kann dieser Fall bejaht werden 209, findet eine Extraktion 210 des Charakteristikums 110 statt und es folgt eine Überführung 211 des Charakteristikums 110 in einen maschinellen Lern- und Auswerteprozess 212 statt. Hier kann das Charakteristikum 110 vorteilhaft analysiert werden und Aussagen darüber getroffen werden. Dies kann lokal im Mobilgerät oder fernab, beispielsweise mittels Cloudcomputing stattfinden.

Anschließend kann beispielsweise eine Voraussagewahrscheinlichkeit über den vermeintlichen Unfall bestimmt werden oder eine Bewertung stattfinden.

Es wird darauf hingewiesen, dass in der obigen Diskussion eine Vielzahl verschiedener Systeme, Komponenten und/oder Logik beschrieben wurde. Es wird deutlich, dass solche Systeme, Komponenten und/oder Logik aus Hardwareelementen (wie Prozessoren und zugehörigen Speichern oder anderen Verarbeitungskomponenten, von denen einige unten beschrieben werden) bestehen können, die die mit diesen Systemen, Komponenten und/oder Logik verbundenen Funktionen ausführen.

In einem Beispiel können dies Computerprozessoren mit zugehörigem Speicher und Zeitsteuerungsschaltungen sein, die nicht gesondert dargestellt sind. Sie sind funktionale Teile der Systeme oder Geräte, zu denen sie gehören, und werden durch die anderen Komponenten oder Elemente in diesen Systemen aktiviert und erleichtern deren Funktion. Darüber hinaus können die Systeme, Komponenten und/oder Logik aus Software bestehen, die in einen Speicher geladen und anschließend von einem Prozessor oder Server oder einer anderen Computerkomponente ausgeführt wird, wie unten beschrieben. Die Systeme, Komponenten und/oder Logik können auch aus verschiedenen Kombinationen von Hardware, Software, Firmware usw. bestehen, von denen einige Beispiele unten beschrieben werden. Dies sind nur einige Beispiele für verschiedene Strukturen, die verwendet werden können, um die oben beschriebenen Systeme, Komponenten und/oder Logik zu bilden.

Auch die Anzeige(n) der Benutzerschnittstelle wurden genutzt. Beispiele für Benutzerschnittstellen-Displays können eine Vielzahl von Formen mit verschiedenen vom Benutzer betätigbaren Eingabemechanismen annehmen.

So kann ein Benutzereingabemechanismus beispielsweise Symbole, Links, Menüs, Textfelder, Kontrollkästchen usw. umfassen und auf eine Vielzahl unterschiedlicher Arten betätigt werden. Beispiele für Eingabegeräte zur Betätigung der Eingabemechanismen sind unter anderem Hardwaregeräte (z. B. Point-and-Click-Geräte, Hardwaretasten, Schalter, ein Joystick oder eine Tastatur, Daumenschalter oder Daumenpads usw.) und virtuelle Geräte (z. B. virtuelle Tastaturen oder andere virtuelle Aktoren). Ein vom Benutzer betätigbarer Eingabemechanismus kann zum Beispiel durch eine Berührungsgeste auf einem berührungsempfindlichen Bildschirm betätigt werden. In einem anderen Beispiel kann ein benutzeraktivierbarer Eingabemechanismus durch einen Sprachbefehl ausgelöst werden.

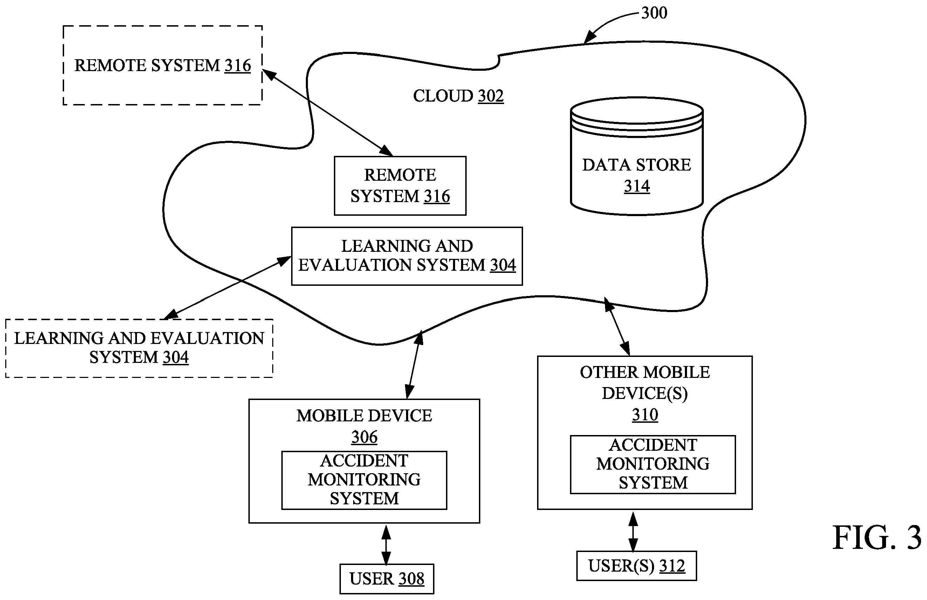

Fig. 3 ist ein Blockdiagramm eines Beispiels für eine Remote-Server-Architektur 300. In einem Beispiel kann die Remote-Server-Architektur 300 Rechen-, Software-, Datenzugriffs- und Speicherdienste bereitstellen, die keine Kenntnis des Endbenutzers über den physischen Standort oder die Konfiguration des Systems erfordern, das die Dienste bereitstellt. In verschiedenen Beispielen können entfernte Server die Dienste über ein Netzwerk, wie z. B. das Internet, unter Verwendung geeigneter Protokolle bereitstellen. So können entfernte Server beispielsweise Anwendungen über das Netzwerk bereitstellen, auf die über einen Webbrowser oder eine andere Computerkomponente zugegriffen werden kann.

Fig. 3 zeigt, dass sich das Lern- und Bewertungssystem an einem entfernten Serverstandort 302 befinden kann, wie durch Block 304 dargestellt. Daher greift das mobile Gerät (z. B. das mobile Gerät 306) des Benutzers (z. B. des Benutzers 308) über den entfernten Serverstandort 302 auf das System 304 zu. Darüber hinaus können auch die mobilen Geräte 310 anderer Benutzer 312 auf das System 304 zugreifen. Jedes der mobilen Geräte 306 und 310 kann ein Unfallüberwachungssystem enthalten, wie in Fig. 3 dargestellt. Beispiele für ein Unfallüberwachungssystem sind oben beschrieben und Gegenstand der vorliegenden Erfindung. Der entfernte Serverstandort 302 kann auch einen Datenspeicher 314 und ein entferntes System 316 umfassen. Beispiele für das entfernte System 316 sind oben beschrieben.

Fig. 3 zeigt ein weiteres Beispiel für eine Remote-Server-Architektur. Fig. 3 zeigt, dass es auch denkbar ist, dass einige Elemente am Standort des Remote-Servers 302 angeordnet sind und andere nicht. Unabhängig davon, wo sie sich befinden, kann auf die Elemente über ein Netzwerk (entweder ein globales Netzwerk wie das Internet oder ein lokales Netzwerk) direkt von mobilen Geräten 306, 310 zugegriffen werden. Die Elemente können an einem entfernten Standort von einem Dienst gehostet werden, oder sie können als Dienst bereitgestellt werden, oder der Zugriff kann über einen Verbindungsdienst erfolgen, der sich an einem entfernten Standort befindet.

Die Elemente der beschriebenen Figuren oder Teile der Elemente können auf einer Vielzahl unterschiedlicher Geräte angeordnet werden. Einige dieser Geräte sind Server, Desktop-Computer, Laptops, Tablet-Computer oder andere mobile Geräte wie Palmtop-Computer, Handys, Smartphones, Multimedia-Player, persönliche digitale Assistenten usw..

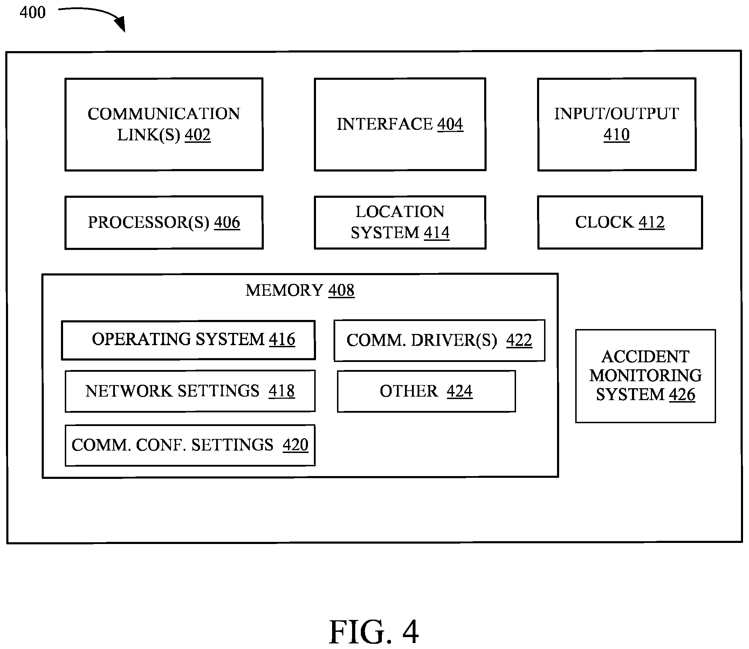

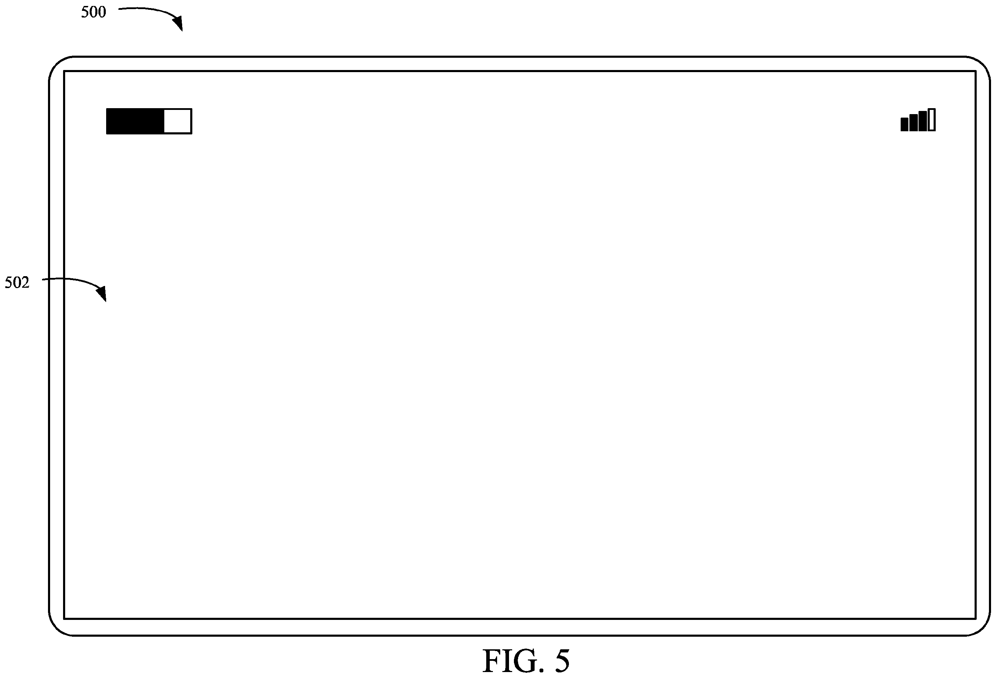

Fig. 4 ist ein vereinfachtes Blockdiagramm eines Beispiels für ein Client-Gerät 400, wie z. B. ein Handheld oder ein mobiles Gerät, in dem das vorliegende System (oder Teile des vorliegenden Systems) eingesetzt werden kann. Fig. 5 zeigt ein Beispiel für ein Handgerät oder ein mobiles Gerät.

Eine oder mehrere Kommunikationsverbindungen 402 ermöglichen es dem Gerät 400, mit anderen Computergeräten zu kommunizieren. Ein Beispiel hierfür sind Kommunikationsprotokolle wie drahtlose Dienste, die den zellularen Zugang zu einem Netzwerk, z.B. dem Internet ermöglichen, sowie Protokolle, die lokale drahtlose Verbindungen zu Netzwerken, z.B. einen WLAN, ermöglichen. Anwendungen oder andere Daten können auf einem externen (z. B. entfernbaren) Speichergerät oder Speicher empfangen werden, das mit einer Schnittstelle 404 verbunden ist. Die Schnittstelle 404 und die Kommunikationsverbindungen 402 kommunizieren mit einem oder mehreren Prozessoren 406 über einen Kommunikationsbus, der auch mit dem Speicher 408 und den Ein-/Ausgabekomponenten 410 sowie der Uhr 412 und einem Ortungssystem 414 verbunden sein kann.

Die Komponenten 410 erleichtern die Eingabe- und Ausgabevorgänge für das Gerät 400 und können Eingabekomponenten wie Mikrofone, Touchscreens, Tasten, Berührungssensoren, optische Sensoren, Näherungssensoren, Orientierungssensoren und Beschleunigungsmesser umfassen. Zu den Komponenten 410 können Ausgabekomponenten wie eine Anzeigevorrichtung, ein Lautsprecher oder ein Druckeranschluss gehören.

Die Uhr 412 umfasst in einem Beispiel eine Echtzeituhrkomponente, die Uhrzeit und Datum ausgibt und Zeitmessfunktionen für den Prozessor 406 bereitstellen kann.

Das Ortungssystem 414 gibt den aktuellen geografischen Standort des Geräts 400 aus und kann einen GPS-Empfänger (Global Positioning System), ein LORAN-System, ein Koppelnavigationssystem, ein zellulares Triangulationssystem oder ein anderes Ortungssystem umfassen.

Der Speicher 408 speichert ein Betriebssystem 416, Netzwerkanwendungen und entsprechende Konfigurationseinstellungen 418, Kommunikationskonfigurationseinstellungen 420, Kommunikationstreiber 422 und kann weitere Elemente 424 enthalten. Beispiele für den Speicher 408 sind flüchtige und nichtflüchtige computerlesbare Speichergeräte. Der Speicher 408 kann auch Computerspeichermedien enthalten, auf denen computerlesbare Anweisungen gespeichert sind, die, wenn sie vom Prozessor 406 ausgeführt werden, den Prozessor veranlassen, computerimplementierte Schritte oder Funktionen gemäß den Anweisungen durchzuführen.

Der Prozessor 406 kann durch andere Komponenten aktiviert werden, um die Funktionalität dieser Komponenten ebenfalls zu erleichtern.

Die Vorrichtung 400 umfasst auch ein Unfallüberwachungssystem 426 nach einer Ausführungsform des vorliegenden Verfahrens.

Fig. 5 zeigt ein Beispiel für einen Tablet-Computer oder ein Smartphone 500 mit einem Bildschirm 502, **z. B.** einem Touchscreen oder einer stiftfähigen Schnittstelle. Der Bildschirm 502 kann auch eine virtuelle Tastatur bieten und/oder über einen Mechanismus, **z. B.** eine drahtgebundene oder drahtlose Verbindung, mit einer Tastatur oder einem anderen Benutzereingabegerät verbunden sein. Alternativ oder zusätzlich kann der Computer 500 auch Spracheingaben empfangen.

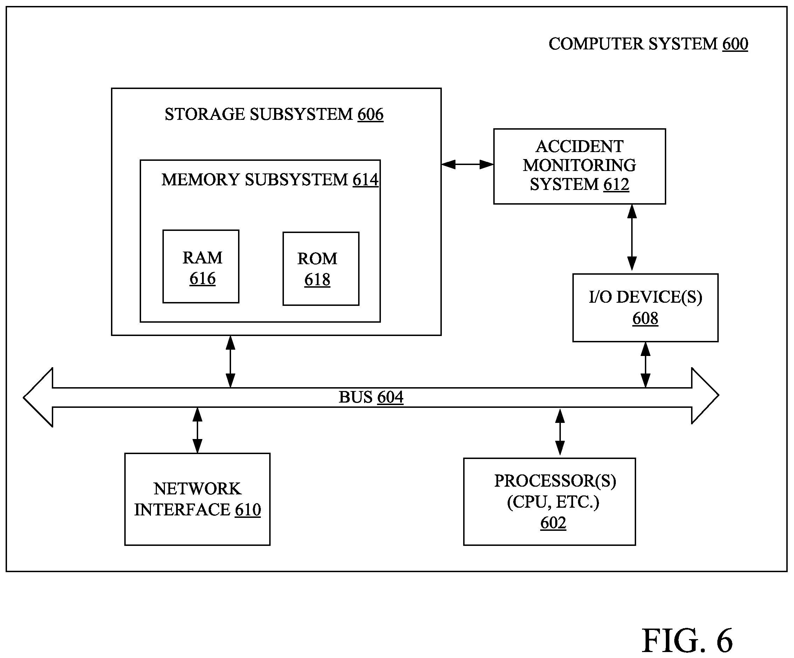

Fig. 6 zeigt ein Beispiel für ein Computersystem 600, das zur Implementierung der beschriebenen Technologie verwendet werden kann. Das Computersystem 600 umfasst mindestens einen Prozessor 602 (z. B. eine Zentraleinheit (CPU)), der über ein Bus-Subsystem 604 mit einer Reihe von Peripheriegeräten kommuniziert. Diese Peripheriegeräte können ein SpeicherSubsystem 606, das z. B. Speichergeräte, Benutzerschnittstellen-Eingabe- und/oder -Ausgabegeräte 608 und eine Netzwerkschnittstelle 610 umfasst.

Die Geräte 608 ermöglichen die Benutzerinteraktion mit dem Computersystem 600.

Das Netzwerkschnittstellen-Teilsystem 610 bietet eine Schnittstelle zu externen Netzwerken, einschließlich einer Schnittstelle zu entsprechenden Schnittstellengeräten in anderen Computersystemen.

In einem Beispiel ist ein Unfallüberwachungssystem 612 nach dem Gegenstand des Verfahrens kommunikativ mit dem SpeicherSubsystem 606 und den Geräten 608 verbunden. Zu den Geräten 608 können Tastaturen, Zeigegeräte (z.B. eine Maus, ein Trackball, ein Touchpad oder ein Grafiktablett), ein Scanner, ein Touchscreen, Audio-Eingabegeräte (z. B. Spracherkennungssysteme und Mikrofone) und/oder andere Arten von Geräten gehören.

Zu den Vorrichtungen 608 können auch Geräte wie Drucker, Faxgeräte, nicht-visuelle Anzeigen, visuelle Anzeigen (z. B. LED-Anzeigen, Kathodenstrahlröhren (CRT), Flachbildschirme oder ein anderer Mechanismus zur Erzeugung eines sichtbaren Bildes gehören.

Das Speichersubsystem 606 speichert Programmier- und Datenkonstrukte, die die Funktionalität einiger oder aller der hier beschriebenen Module und Methoden bereitstellen. Diese Softwaremodule werden im Allgemeinen von Prozessoren 602 ausgeführt. Prozessoren 602 können auch Grafikverarbeitungseinheiten (GPUs), feldprogrammierbare Gate-Arrays (FPGAs), anwendungsspezifische integrierte Schaltungen (ASICs) und/oder rekonfigurierbare Architekturen (CGRAs) umfassen. Die Prozessoren 678 können von einer Deep Learning Cloud-Plattform gehostet werden.

Ein Speicher-Teilsystem 614, das im Speicher-Teilsystem 606 verwendet wird, kann eine Reihe von Speichern umfassen, darunter einen Haupt-Direktzugriffsspeicher (RAM) 616 zur Speicherung von Befehlen und Daten während der Programmausführung und einen Festwertspeicher (ROM) 618, in welchen fest vorgegebene Daten oder Befehle gespeichert werden.

Das Bus-Teilsystem 604 bietet einen Mechanismus, der die verschiedenen Komponenten und Teilsysteme des Computersystems 600 wie vorgesehen miteinander kommunizieren lässt. Obwohl das Bus-Subsystem 604 schematisch als ein einzelner Bus dargestellt ist, können alternative Implementierungen des Bus-Subsystems mehrere Busse verwenden.

Das Computersystem 600 selbst kann von unterschiedlichem Typ sein, z. B. ein Personal Computer, ein tragbarer Computer, eine Workstation, ein Computerterminal, ein Netzwerkcomputer, ein Fernsehgerät, ein Großrechner, eine Serverfarm, ein weit verteilter Satz von lose vernetzten Computern oder ein anderes Datenverarbeitungssystem oder Benutzergerät. Aufgrund der sich ständig verändernden Natur von Computern und Netzwerken ist die Beschreibung des in Fig. 6 dargestellten Computersystems 600 nur als ein spezifisches Beispiel zur Veranschaulichung der bevorzugten Implementierungen der vorliegenden Erfindung gedacht. Viele andere Konfigurationen des Computersystems 600 sind möglich, mit mehr oder weniger Komponenten als das in Fig. 6 dargestellte Computersystem.

Obwohl die vorliegende Erfindung unter Bezugnahme auf bevorzugte Ausführungsformen beschrieben wurde, wird der Fachmann erkennen, dass Änderungen in Form und Detail vorgenommen werden können, ohne von der Erfindung abzuweichen.

### Bezugszeichenliste:

- 101: Sensordaten
- 102: erster Schwellenwert
- 103: zweiter Schwellenwert
- 104: erster Zeitstempel
- 105: zweiter Zeitstempel
- 106: dritter Zeitstempel
- 107: vierter Zeitstempel
- 108: Zeit
- 109: Einheit
- 110: Charakteristikum/Peak
- 111: initialer Zustand
- 112: Wartezeit

- 201: Filterung
- 202: Datenpuffer
- 203: Initialzustand
- 204: zweiter Schwellenwert
- 205: tiefer Endzustand
- 206: Signalverarbeitung
- 207: Übergabe des Charakteristikums
- 208: Prüfen des Charakteristikums
- 209: Ja
- 210: Extraktion des Charakteristikums
- 211: Überführung des Charakteristikums
- 212: maschineller Lern- und Auswerteprozess
- 213: Voraussagewahrscheinlichkeit

- 300: Remote Server Architektur
- 302: Serverstandort
- 304: System
- 306: mobiles Gerät
- 308: Benutzer
- 310: mobile Geräte
- 312: Benutzer
- 314: Datenspeicher
- 316: entferntes System

- 400: Client Gerät
- 402: Kommunikationsverbindung
- 404: Schnittstelle
- 406: Prozessor
- 408: Speicher
- 410: Ein-/Ausgabekomponente
- 412: Uhr
- 414: Ortungssystem
- 416: Betriebssystem
- 418: Konfigurationseinstellungen
- 420: Kommunikationskonfigurationseinstellungen
- 422: Kommunikationstreiber
- 424: weitere Elemente
- 426: Unfallüberwachungssystem

- 500: Tablet / Smartphone
- 502: Bildschirm

- 600: Computersystem
- 602: Prozessor
- 604: BUS-Subsystem
- 606: Speicher Subsystem
- 608: Ein-/Ausgabegeräte
- 610: Netzwerkschnittstelle
- 612: Unfallüberwachungssystem
- 614: Speicher Teilsystem
- 616: RAM
- 318: ROM

## Patentansprüche

1. Verfahren zur Erkennung und Bewertung eines Unfalls eines Fahrzeugs,
wobei die Verfahrensschritte zumindest teilweise auf einem Mobilgerät ausgeführt werden,
wobei das Mobilgerät wenigstens einen Sensor aufweist, wobei das Mobilgerät mit dem Fahrzeug mitgeführt wird, wobei auf dem Mobilgerät ein Unfallüberwachungssystem derart betrieben wird, dass
a) Sensordaten (101) des Sensors mittels des Mobilgeräts ständig erfasst werden und nach der Art eines Loop-Aufnahme-Speichers, eines Schleifen-Speichers, eines Überlaufspeichers oder eines FiFo-Puffer-Speichers in einem Speicher vorrübergehend gespeichert werden;
b) sobald von den Sensordaten (101) ein für den Sensor festgelegter erster Schwellenwert (102) passiert wird, in dem Speicher ein erster Zeitstempel (104) gesetzt wird;
c) sobald danach von den Sensordaten ein für den Sensor festgelegter zweiter Schwellenwert (103) passiert wird, in dem Speicher ein zweiter Zeitstempel (105) gesetzt wird;
d) sobald danach von den Sensordaten der zweite Schwellenwert (103) erneut passiert wird, ein dritter Zeitstempel (106) gesetzt wird;
e) sobald danach von den Sensordaten (101) der erste Schwellenwert (102) erneut passiert wird, ein vierter Zeitstempel (107) gesetzt wird,
- wobei der zweite Schwellenwert (103) oberhalb oder unterhalb des ersten Schwellenwertes (102) liegt;
f) falls wenigstens der erster Zeitstempel (104) und der zweiter Zeitstempel (105) und der vierter Zeitstempel (107) vorliegen, ein erstes Charakteristikum (110) der Sensordaten (101) anhand einer Zeitspanne definiert wird, wobei die Zeitspanne zumindest einen Teil eines Zeitfensters umfasst, das sich zwischen dem ersten Zeitstempel (104) und dem vierten Zeitstempel (107) erstreckt;
g) das Charakteristikum (110) zu dessen Bewertung einem maschinellen Lern- und Auswerteprozess zugeführt wird;
h) eine Unfallwahrscheinlichkeit auf der Grundlage des Charakteristikums (110), sowie weiterer bereits definierter Charakteristika (110) erkannt und/oder prognostiziert wird;
i) ein Ergebnis des Verfahrens wenigstens von dem Mobilgerät ausgegeben wird.

2. Verfahren nach einem der vorangehenden Ansprüche, **dadurch gekennzeichnet, dass** das Charakteristikum (110) die Sensordaten (101) mindestens zwischen dem ersten Zeitstempel (104) und dem vierten Zeitstempel (107) umfasst.

3. Verfahren nach einem der vorangehenden Ansprüche, **dadurch gekennzeichnet, dass** das Charakteristikum (110) mit einer Gewichtung beaufschlagt wird und dem Lern- und Auswerteprozess zugeführt wird,
wobei die Gewichtung auf Grundlage der Zeitstempel (104, 105, 106, 107) und/oder dem Verhältnis der Zeitstempel (104, 105, 106, 107) zueinander und/oder der Zeitdifferenzen zwischen der Zeitstempel (104, 105, 106, 107) und/oder des Verlaufs der Sensordaten (101) binnen des Charakteristikums (110), basiert.

4. Verfahren nach einem der vorangehenden Ansprüche, **dadurch gekennzeichnet, dass** der Lern- und Auswerteprozess lokal auf dem Mobilgerät und/oder dezentral auf einer Cloudcomputing-Plattform ausgeführt wird
und/oder dass das Ergebnis des Verfahrens zumindest auf dem mobilen Gerät lokal angezeigt wird.

5. Verfahren nach einem der vorangehenden Ansprüche, **dadurch gekennzeichnet, dass** das Charakteristikum (110) nur dann dem maschinellen Lern- und Auswerteprozess zugeführt wird, falls die Zeitspanne des Charakteristikums (110) unter 5 Sekunden, insbesondere unter 1 Sekunde liegt.

6. Verfahren nach einem der vorangehenden Ansprüche, **dadurch gekennzeichnet, dass** im Anschluss an eine Zeitspanne des Charakteristikums (110), insbesondere an den vierten Zeitstempel (107) anschließend, eine Wartezeit (112) abgewartet wird, wobei die Wartezeit (112) bis zu zwei Sekunden, insbesondere bis zu einer Sekunde beträgt.

7. Verfahren nach einem der vorangehenden Ansprüche, **dadurch gekennzeichnet, dass** der erste Schwellenwert (102) und/oder der zweite Schwellenwert (103) situationsabhängig, insbesondere variabel, festgelegt wird/werden.

8. Verfahren nach einem der vorangehenden Ansprüche, **dadurch gekennzeichnet, dass** in einem initialen Zustand (111) die Funktionsfähigkeit der Sensoren anhand der Sensordaten (101) überprüft wird.

9. Verfahren nach einem der vorangehenden Ansprüche, **dadurch gekennzeichnet, dass** mittels des Speichers Sensordaten für die Dauer von 30 Sekunden, insbesondere für 25 Sekunden, bevorzugt für 20 Sekunden, im Speziellen für 15 Sekunden oder 10 Sekunden gespeichert werden.

10. Verfahren nach einem der vorangehenden Ansprüche, **dadurch gekennzeichnet, dass** Sensordaten (101) eines Audio-Sensors und/oder eines Beschleunigungssensors und/oder eines Foto-Sensors (Kamera) und/oder eines Gyro-Sensors und/oder eines GPS-Sensors und/oder eines Näherungssensors erfasst und/oder ausgewertet werden.

11. Verfahren nach einem der vorangehenden Ansprüche, **dadurch gekennzeichnet, dass** die Sensordaten (101), insbesondere situationsabhängig, einer Datenkorrektur unterzogen werden.

12. Verfahren nach einem der vorangehenden Ansprüche, **dadurch gekennzeichnet, dass** die Sensordaten (101) auf die Dynamik des Schwerpunktes des Mobilgerätes, den Einfluss des Schwerkraftvektors auf den/die Sensor(en) und/oder gegenüber einem Inertialsystem des Mobilgeräts korrigiert werden, und/oder dass die Sensordaten (101) auf die Dynamik des Inertialsystems des Fahrzeugs gegenüber dem Inertialsystem des Mobilgeräts korrigiert werden.

13. Verfahren nach einem der vorangehenden Ansprüche, **dadurch gekennzeichnet, dass** das Charakteristikum (110) mit den weiteren Charakteristika (110), insbesondere gespeicherten Charakteristika (110) aus der Vergangenheit, verglichen wird,
und/oder
dass weitere Charakteristika (110), weiterer Mobilgeräte, dem Lern- und Auswerteprozess zugeführt werden.

14. Verfahren nach einem der vorangehenden Ansprüche, dass anhand der Sensordaten zwischen dem zweiten Zeitstempel (105) und dem dritten Zeitstempel (106), insbesondere zwischen dem ersten Zeitstempel (104) und dem vierten Zeitstempel (107), eine Bewertung des Charakteristikums (110) getroffen wird, insbesondere dahingehend wie gravierend ein das Charakteristikum (110) auslösende Ereignis, insbesondere ein Unfall, ist.

15. Verfahren nach einem der vorhergehenden Ansprüche, wobei der maschinelle Lern- und Bewertungsprozess mehrere Charakteristika (110) berücksichtigt, die sich aus Daten unterschiedlicher Sensoren ergeben, insbesondere für zusätzliche Analysen wie Verifizierung, Gewichtung, Korrektur oder Plausibilitätsprüfung einer Unfallwahrscheinlichkeit.

## Claims

1. Method for detecting and assessing an accident involving a vehicle,
wherein the method steps are carried out at least partially on a mobile device,
wherein the mobile device has at least one sensor, wherein the mobile device is carried along with the vehicle,
wherein an accident monitoring system is operated on the mobile device in such a way that
a) sensor data (101) from the sensor are continuously captured by means of the mobile device and are temporarily stored in a memory in the manner of a loop recording memory, a loop memory, an overflow memory or a FiFo buffer memory;
b) as soon as a first threshold value (102) defined for the sensor is passed by the sensor data (101), a first time stamp (104) is set in the memory;
c) as soon as a second threshold value (103) defined for the sensor is subsequently passed by the sensor data, a second time stamp (105) is set in the memory;
d) as soon as the second threshold value (103) is subsequently passed again by the sensor data, a third time stamp (106) is set;
e) as soon as the first threshold value (102) is subsequently passed again by the sensor data (101), a fourth time stamp (107) is set,
- wherein the second threshold value (103) lies above or below the first threshold value (102);
f) if at least the first time stamp (104) and the second time stamp (105) and the fourth time stamp (107) are present, a first characteristic (110) of the sensor data (101) is defined on the basis of a time period, wherein the time period comprises at least part of a time window extending between the first time stamp (104) and the fourth time stamp (107);
g) the characteristic (110) is supplied for its assessment to a machine learning and evaluation process;
h) an accident probability is detected and/or predicted on the basis of the characteristic (110) and further already defined characteristics (110);
i) a result of the method is output at least by the mobile device.

2. Method according to one of the preceding claims, **characterized in that** the characteristic (110) comprises the sensor data (101) at least between the first time stamp (104) and the fourth time stamp (107).

3. Method according to one of the preceding claims, **characterized in that** a weighting is applied to the characteristic (110) and the latter is supplied to the learning and evaluation process,
wherein the weighting is based on the time stamps (104, 105, 106, 107) and/or the ratio of the time stamps (104, 105, 106, 107) to one another and/or the time differences between the time stamps (104, 105, 106, 107) and/or the profile of the sensor data (101) within the characteristic (110).

4. Method according to one of the preceding claims, **characterized in that** the learning and evaluation process is carried out locally on the mobile device and/or in a decentralized manner on a cloud computing platform,
and/or **in that** the result of the method is displayed locally at least on the mobile device.

5. Method according to one of the preceding claims, **characterized in that** the characteristic (110) is supplied to the machine learning and evaluation process only if the time period of the characteristic (110) is less than 5 seconds, in particular less than 1 second.

6. Method according to one of the preceding claims, **characterized in that** a waiting time (112) is awaited following a time period of the characteristic (110), in particular following the fourth time stamp (107), wherein the waiting time (112) is up to two seconds, in particular up to one second.

7. Method according to one of the preceding claims, **characterized in that** the first threshold value (102) and/or the second threshold value (103) is/are defined in a situation-dependent manner, in particular variably.

8. Method according to one of the preceding claims, **characterized in that**, in an initial state (111), the functionality of the sensors is checked on the basis of the sensor data (101).

9. Method according to one of the preceding claims, **characterized in that** sensor data are stored by means of the memory for the duration of 30 seconds, in particular for 25 seconds, preferably for 20 seconds, in particular for 15 seconds or 10 seconds.

10. Method according to one of the preceding claims, **characterized in that** sensor data (101) from an audio sensor and/or an acceleration sensor and/or a photo sensor (camera) and/or a gyro sensor and/or a GPS sensor and/or a proximity sensor are captured and/or evaluated.

11. Method according to one of the preceding claims, **characterized in that** the sensor data (101) are subjected to a data correction, in particular depending on the situation.

12. Method according to one of the preceding claims, **characterized in that** the sensor data (101) are corrected with respect to the dynamics of the centre of gravity of the mobile device, the influence of the gravitational vector on the sensor(s) and/or with respect to an inertial system of the mobile device,
and/or **in that** the sensor data (101) are corrected with respect to the dynamics of the inertial system of the vehicle in relation to the inertial system of the mobile device.

13. Method according to one of the preceding claims, **characterized in that** the characteristic (110) is compared with the further characteristics (110), in particular stored characteristics (110) from the past, and/or
**in that** further characteristics (110) of further mobile devices are supplied to the learning and evaluation process.

14. Method according to one of the preceding claims, **characterized in that** the characteristic (110) is assessed on the basis of the sensor data between the second time stamp (105) and the third time stamp (106), in particular between the first time stamp (104) and the fourth time stamp (107), in particular with regard to how serious an event triggering the characteristic (110), in particular an accident, is.

15. Method according to one of the preceding claims, wherein the machine learning and assessment process takes into account a plurality of characteristics (110) which result from data from different sensors, in particular for additional analyses such as verification, weighting, correction or plausibility checking of an accident probability.

## Revendications

1. Procédé de détection et d'évaluation d'un accident d'un véhicule ;
dans lequel les étapes de procédé sont réalisées au moins partiellement sur un appareil mobile,
l'appareil mobile présentant au moins un capteur, l'appareil mobile étant transporté dans le véhicule, dans lequel un système de surveillance d'accident est exploité sur l'appareil mobile de telle sorte que
a) des données de capteur (101) du capteur sont acquises en continu au moyen de l'appareil mobile et sont stockées temporairement dans une mémoire, à la manière d'une mémoire d'enregistrement en boucle, d'une mémoire en boucle, d'une mémoire de débordement ou d'une mémoire tampon FIFO ;
b) dès qu'une première valeur seuil (102) définie pour le capteur est passée par les données de capteur (101), un premier horodatage (104) est réglé dans la mémoire ;
c) dès qu'une deuxième valeur seuil (103) définie pour le capteur est ensuite passée par les données de capteur, un deuxième horodatage (105) est réglé dans la mémoire ;
d) dès que la deuxième valeur seuil (103) est ensuite repassée par les données de capteur, un troisième horodatage (106) est réglé ;
e) dès que la première valeur seuil (102) est ensuite repassée par les données de capteur (101), un quatrième horodatage (107) est réglé,
- la deuxième valeur seuil (103) étant supérieure ou inférieure à la première valeur seuil (102) ;
f) si au moins le premier horodatage (104) et le deuxième horodatage (105) et le quatrième horodatage (107) sont présents, une première caractéristique (110) des données de capteur (101) est définie en fonction d'une période de temps, la période de temps comprenant au moins une partie d'une fenêtre temporelle qui s'étend entre le premier horodatage (104) et le quatrième horodatage (107) ;
g) la caractéristique (110) est amenée à un processus d'apprentissage et d'analyse machine en vue de son évaluation ;
h) une probabilité d'accident est détectée et/ou prédite sur la base de la caractéristique (110) ainsi que d'autres caractéristiques (110) déjà définies ;
i) un résultat du procédé est délivré au moins par l'appareil mobile.

2. Procédé selon l'une quelconque des revendications précédentes, **caractérisé en ce que** la caractéristique (110) comprend les données de capteur (101) au moins entre le premier horodatage (104) et le quatrième horodatage (107).

3. Procédé selon l'une quelconque des revendications précédentes, **caractérisé en ce que** la caractéristique (110) est soumise à une pondération et est amenée au processus d'apprentissage et d'analyse,
dans lequel la pondération repose sur la base des horodatages (104, 105, 106, 107) et/ou du rapport entre les horodatages (104, 107, 106, 107) et/ou des différences temporelles entre les horodatages (104, 105, 106, 105) et/ou de l'évolution des données de capteur (101) dans le cadre de la caractéristique (110).

4. Procédé selon l'une quelconque des revendications précédentes, **caractérisé en ce que** le processus d'apprentissage et d'analyse est exécuté de manière locale sur l'appareil mobile et/ou décentralisée sur une plateforme informatique en nuage,
et/ou **en ce que** le résultat du procédé est affiché localement au moins sur l'appareil mobile.

5. Procédé selon l'une quelconque des revendications précédentes, **caractérisé en ce que** la caractéristique (110) n'est amenée au processus d'apprentissage et d'analyse machine que si la période de temps de la caractéristique (110) est inférieure à 5 secondes, en particulier inférieure à 1 seconde.

6. Procédé selon l'une quelconque des revendications précédentes, **caractérisé en ce que** suite à une période de temps de la caractéristique (110), en particulier suite au quatrième horodatage (107), un temps d'attente (112) est respecté, le temps d'attente (112) allant jusqu'à deux secondes, en particulier jusqu'à une seconde.

7. Procédé selon l'une quelconque des revendications précédentes, **caractérisé en ce que** la première valeur seuil (102) et/ou la deuxième valeur seuil (103) sont définies en fonction de la situation, en particulier de manière variable.

8. Procédé selon l'une quelconque des revendications précédentes, **caractérisé en ce que** dans un état initial (111), la fonctionnalité des capteurs est vérifiée au moyen des données de capteur (101).

9. Procédé selon l'une quelconque des revendications précédentes, **caractérisé en ce que** des données de capteur sont stockées au moyen de la mémoire pendant une durée de 30 secondes, en particulier pendant 25 secondes, de préférence pendant 20 secondes, spécifiquement pendant 15 secondes ou 10 secondes.

10. Procédé selon l'une quelconque des revendications précédentes, **caractérisé en ce que** des données de capteur (101) d'un capteur audio et/ou d'un capteur d'accélération et/ou d'un capteur photo (caméra) et/ou d'un capteur gyroscopique et/ou d'un capteur GPS et/ou d'un capteur de proximité sont acquises et/ou analysées.

11. Procédé selon l'une quelconque des revendications précédentes, **caractérisé en ce que** les données de capteur (101) sont soumises à une correction de données, en particulier en fonction de la situation.

12. Procédé selon l'une quelconque des revendications précédentes, **caractérisé en ce que** les données de capteur (101) sont corrigées quant à la dynamique du centre de gravité de l'appareil mobile, l'influence du vecteur de gravité sur le(s) capteur(s) et/ou par rapport à un référentiel galiléen de l'appareil mobile,
et/ou **en ce que** les données de capteur (101) sont corrigées quant à la dynamique du référentiel galiléen du véhicule par rapport au référentiel galiléen de l'appareil mobile.

13. Procédé selon l'une quelconque des revendications précédentes, **caractérisé en ce que** la caractéristique (110) est comparée aux autres caractéristiques (110), en particulier aux caractéristiques stockées (110) du passé, et/ou
**en ce que** d'autres caractéristiques (110), issues d'autres appareils mobiles, sont amenées au processus d'apprentissage et d'analyse.

14. Procédé selon l'une quelconque des revendications précédentes, **caractérisé en ce qu'**une évaluation de la caractéristique (110) est effectuée à l'aide des données de capteur entre le deuxième horodatage (105) et le troisième horodatage (106), en particulier entre le premier horodatage (104) et le quatrième horodatage (107), en particulier en termes de gravité d'un évènement déclenchant la caractéristique (110), en particulier d'un accident.

15. Procédé selon l'une quelconque des revendications précédentes, dans lequel le processus d'apprentissage et d'analyse machine prend en compte plusieurs caractéristiques (110) qui résultent de données de différents capteurs, en particulier pour des analyses supplémentaires telles que vérification, pondération, correction ou contrôle de plausibilité d'une probabilité d'accident.
